# EUROPÄISCHE PATENTSCHRIFT

(11) **EP 2 295 679 B1**
(45) Veröffentlichungstag und Bekanntmachung des Hinweises auf die Patenterteilung: **24.10.2018**
(21) Anmeldenummer: 10009482.0
(22) Anmeldetag: 13.09.2010
(51) Int. Cl.: E05B 47/02, F16P 7/00

(54) **Zuhaltung für ein Bauteil zum Verschließen einer Öffnung**
Locking device for a component for closing an opening
Dispositif de verrouillage pour un composant destiné à la fermeture d'une ouverture

(30) Priorität: 14.09.2009 DE 102009041101
(43) Veröffentlichungstag der Anmeldung: 16.03.2011
(73) Patentinhaber: K.A. Schmersal Holding GmbH & Co. KG, 42279 Wuppertal (DE)
(72) Erfinder: Sparenberg, Ingo, 58256 Ennepetal (DE); Wilting, Andreas, 58300 Wetter (DE); Cevik, Yasar, 58095 Hagen (DE); Yu, Yao, 42119 Wuppertal (DE); Herbote, Michael, 45549 Sprockhövel (DE)
(74) Vertreter: Sparing Röhl Henseler

(56) Entgegenhaltungen:
- WO-A1-2005/019571
- CN-Y- 2 801 998
- DE-A1- 10 139 675
- DE-A1- 19 710 834
- DE-A1-102004 030 362

## Beschreibung

Die Erfindung betrifft eine Zuhaltung für ein Bauteil zum Verschließen einer Öffnung nach dem Oberbegriff des Anspruchs 1.

Zuhaltungen sind als Teil einer Zugangsschutzeinrichtung für einen verschließbaren Raumbereich einer maschinellen Anlage, von dem ein Gefahrenpotenzial ausgehen kann, bekannt. Bei der Anlage kann es sich beispielsweise um Maschinen oder Komponenten wie Roboter zum Herstellen, Behandeln oder Bearbeiten von Werkteilen sowie um chemische Anlagen oder dergleichen handeln.

Eine Zuhaltung ist zwischen einer den Raumbereich verschließenden Tür oder Klappe als beweglicher Teil und gegenüber feststehenden Wänden bzw. Wandungen oder einem Rahmen als feststehender Teil angeordnet. Die mindestens eine gegebenenfalls umlaufend abgedichtete Tür oder Klappe, die durch Schwenken bzw. Schieben geöffnet bzw. geschlossen werden kann, ist durch die Zuhaltung arretierbar bzw. verriegelbar.

Zwischen der Tür und der benachbarten Wand befindet sich jeweils mindestens ein Sicherheitssensor. Außerdem ist eine Steuerung vorgesehen, die mit der maschinellen Anlage und dem Sicherheitssensor gekoppelt ist, um die Zuhaltung entsprechend dem Betriebszustand der maschinellen Anlage zum Öffnen der Tür freizugeben bzw. zu sperren. Wenn von der maschinellen Anlage kein Gefahrenpotenzial für Personen mehr ausgeht, d.h. in den Raumbereich durch die Tür hineingegriffen bzw. der Raumbereich über die Tür begangen werden kann, indem beispielsweise der Steuerung ein Stillstehen der beweglichen Teile der maschinellen Anlage etwa durch Stillstandswächter signalisiert wird, gibt die Steuerung die Zuhaltungen frei, so dass in den Raumbereich durch Öffnen der Türen eine Person gelangen kann.

Stehen zumindest Teile der maschinellen Anlage nicht still oder sind ansonsten vorzunehmende Vorkehrungen vor dem Öffnen der Türen noch nicht getroffen, werden die Zuhaltungen blockiert, so dass die Türen nicht geöffnet werden können. Außerdem verhindert die Steuerung ein Inbetriebnehmen der maschinellen Anlage bei wenigstens einer geöffneten Tür.

Aus DE 197 10 834 A1 ist eine Vorrichtung zum Betätigen eines aus einem Gehäuse herausführbaren Sperrelements bekannt, bei dem eine elektronische Steuervorrichtung über einen mit dem Sperrelement zusammenwirkenden Positionssensor stets die tatsächliche Position des Sperrelements erkennen kann. Auf diese Weise ist es möglich das Sperrelement - in Abhängigkeit von dessen erfasster, aktueller Position - mit verschiedenen, in ihrer Antriebskraft abgestuften Antriebsmomenten eines Elektromotors zu beaufschlagen, um so einen festsitzenden Sperrriegel mit erhöhter Motorlast noch lösen zu können.

DE 101 39 675 A1 beschreibt eine Verriegelungseinrichtung für eine einen Flügel aufweisende Tür, wobei der Flügel in einer ersten Stellung einer Treibstange in einem Rahmen verriegelt ist und in einer zweiten Stellung der Treibstange gegenüber dem Rahmen entriegelt ist. Die Verriegelungseinrichtung weist einen elektrischen Antrieb für die Treibstange mit zwischen dem elektrischen Antrieb und der Treibstange angeordneten Koppelmitteln auf. Die Koppelmittel weisen einen Freibereich auf, in welchem die Treibstange ohne Mitnahme des elektrischen Antriebs bewegbar ist. Dies ermöglicht die Entriegelung und Verriegelung bei Störungen des elektrischen Antriebs.
CN 2 801 998 Y beschreibt ein einbruchssicheres, ferngesteuertes Türschloss für den Alltagsgebrauch. Ein Schließzylinder wird durch einen elektrischen Motor verschoben. Als elektrischer Motor wird ein Gleichstrommotor oder ein Schrittmotor eingesetzt. Bei Verwendung eines Gleichstrommotors wird der Motor gestoppt wenn Endkontakte mit einem Sensorkopf in Berührung gelangen. Bei Verwendung eines Schrittmotors wird der Motor entsprechend einer angenommenen Schrittzahl gesteuert.

Aus DE 10 2004 030 362 A1 ist eine Vorrichtung zum gesteuerten Arretieren einer sicherheitsrelevanten Einrichtung, wie beispielsweise einer Schutztür oder dergleichen, bekannt. Die Vorrichtung weist ein bewegbar gelagertes und von einem Antriebselement antreibbares Arretierungselement auf, das zum Zwecke des Arretierens aus einem Gehäuse der Vorrichtung austretend in formschlüssigen Eingriff mit der zu arretierenden Einrichtung bringbar ist.

Nachteilig bei der aus DE 10 2004 030 362 A1 bekannten Vorrichtung ist, dass bei einer Blockade des Arretierungselements der Antrieb und/oder das Arretierungselement Schaden nehmen kann, da das Arretierungselement und/oder der Antrieb verbogen werden bzw. überhitzen kann. Die Zuhaltung ist dann defekt und muss ausgetauscht werden, was Stillstandszeiten und Reparatur- bzw. Wartungsarbeiten verursacht.

Aufgabe der Erfindung ist es daher, eine Zuhaltung für ein Bauteil zum Verschließen einer Öffnung zu schaffen, mit der eine einfache Ausgestaltung einer verbesserten und sicheren Zuhaltung möglich ist, bei der eine Beschädigung der Zuhaltung mit einfachen Mitteln verhindert werden kann. Diese Aufgabe wird durch die Merkmale des Anspruchs 1 gelöst.

Hierdurch wird eine Zuhaltung für ein Bauteil zum Verschließen einer Öffnung geschaffen. Die Öffnung weist ein bewegliches Teil wie beispielsweise eine Tür, Klappe oder Deckel und ein unbewegliches Teil wie beispielsweise eine Wand(ung) oder einen Rahmen auf. Ein Bolzen ist zwischen einer verriegelnden und einer entriegelten Endstellung in Bolzenlängsrichtung beweglich geführt. Es ist ein eine Bewegung ausführender Antrieb zum Bewegen des Bolzens sowie eine Übertragungseinrichtung zwischen dem Antrieb und dem Bolzen vorgesehen. Der Antrieb ist als Elektromotor ausgestaltet, wobei der Antrieb, die Übertragungseinrichtung und der Bolzen unter unmittelbarer Weitergabe kinetischer Energie bewegungsgekoppelt sind. Durch die mechanische Bewegungskopplung des Antriebs mit dem Bolzen ist eine Überwachung der Bewegung des Antriebs gleichwertig und gleichbedeutend zu einer Überwachung der Bewegung des Bolzens. Bewegt sich der Antrieb, so bewegt sich auch der Bolzen und umgekehrt. Eine Steuerung ist vorhanden, die die Geschwindigkeit der Bolzenbewegung regeln kann. Ferner ist die Steuerung dazu ausgestaltet, eine Bewegung des Antriebs zu überwachen. Die Steuerung ist mit mindestens einem Sensor verbunden, so dass die Steuerung die relative Position des beweglichen Teils zum feststehenden Teil bestimmen kann. Die Bewegung des Antriebs wirkt direkt auf eine Bewegung des Bolzens ohne Zwischenschaltung von Energiespeichern. Der Antrieb, die Übertragungseinrichtung und der Bolzen sind unter unmittelbarer Weitergabe kinetischer Energie gekoppelt. Die Übertragungseinrichtung ist als reine Getriebeeinheit ausgestaltet, die die rotatorische Bewegung an der Abtriebswelle des Elektromotors in eine translatorische Bewegung des Bolzens umsetzt.

Zudem ist ein bezogen auf die Bolzenbewegung ruhender bzw. ortsfester weiterer Sensor, der mit der Steuerung verbunden ist, vorgesehen, mit dem das Erreichen der Endstellungen des Bolzens bestimmbar ist. Die Steuerung kann somit feststellen, ob und wann die Endstellung des Bolzens erreicht wurde, unabhängig davon, ob der Antrieb betätigt wurde. Über den weiteren Sensor ist eine Möglichkeit zur sicheren Abfrage des Erreichens der Endstellungen gegeben.

Ferner ist der Antrieb mit der Steuerung für eine Rückmeldung der Drehung des Antriebs verbunden.

Der Bolzen wird direkt angetrieben. Antrieb(-seinheit) und (Verriegelungs-)Bolzen sind ständig unter unmittelbarer Weitergabe kinetischer Energie bewegungsgekoppelt. Es existiert kein Freibereich; bewegt sich der Antrieb, wird der Bolzen unmittelbar bewegt und umgekehrt, sofern keine Störung vorliegt. Eine Bewegung des Bolzens lässt damit auch unmittelbar Rückschlüsse auf die Bewegung des Antriebs zu. Aus der Bolzenstellung kann auf die Bewegung des Antriebs geschlossen werden. Ebenso kann aus der Bewegung des Antriebs auf den Vorschub des Bolzens geschlossen werden. Aus erhaltenen Sensorsignalen, die beispielsweise die Bolzenstellung repräsentieren, kann auf die Bewegung des Antriebs geschlossen werden; umgekehrt kann aus der messtechnisch ermittelten Drehung des Motors über einen Tachogenerator oder Ähnliches auf die Bewegung des Bolzens geschlossen werden. Für die sicherheitsgerichtete Anwendung kann eine verlässliche steuerungstechnische/messtechnische Aussage darüber getroffen werden, ob der errechnete Vorschub durch die Drehung des Motors und der tatsächliche Vorschub übereinstimmen. Bei einer Diskrepanz des berechneten Vorschubs des Bolzens gegenüber dem berechneten Vorschub durch die Drehung des Motors, insbesondere, wenn trotz Drehung des Antriebs der Bolzen in seiner Position verharrt, was auf einen Defekt des Antriebs oder des Getriebes hinweist, kann die Zuhaltung einen sicheren Zustand einnehmen.

Durch die Verwendung eines Elektromotors als Antrieb wird ein auf dem Fachgebiet vorhandenes Vorurteil überwunden, indem man bisher der Auffassung war, dass in einer Zuhaltung eine Elektromagnetanordnung zwingend vorhanden sein müsste. Obwohl alternative Antriebe zur Elektromagnetanordnung schon lange auf anderen Gebieten bekannt waren, wurden sie aufgrund des Vorurteils der Fachwelt nicht in sicherheitsgerichteten Zuhaltungen verwendet, da eine Elektromagnetanordnung schnell anspricht, dabei robust aufgebaut ist und relativ kostengünstig in der Herstellung ist. Ein anderes Bauteil als einen Elektromagneten zur Betätigung des Bolzens zu verwenden, wurde aufgrund dieser Überlegungen immer wieder verworfen, da auch eine Störung hinsichtlich der bei einem Elektromotor auftretenden elektromagnetischen Felder befürchtet wurde, was für ein sicherheitsgerichtetes Bauteil einen absoluten Ausschluss hinsichtlich der Verwendung bedeutete.

Die Erfinder haben herausgefunden, dass die Geschwindigkeit aufgrund des schnellen Ansprechens einer Elektromagnetanordnung nicht so entscheidend ist, obwohl es sich ja gerade um eine sicherheitsgerichtete Zuhaltung handelt. Auch mit einer geringeren Bolzengeschwindigkeit gegenüber dem "instantanen" Betätigen über einen Elektromagneten wird eine hohe Sicherheit erreicht, da die Erfinder erstmals feststellten, dass auch mit den mit einem Elektromotor erreichbaren Geschwindigkeiten eine sinnvolle Reaktionszeit eines Maschinenbedieners z.B. im Zuge eines beabsichtigten Öffnungsvorgangs des beweglichen Teils bzw. der Tür entsprochen werden kann. Ein Hub des Bolzens um beispielsweise 20 mm ist in einer oder zwei Sekunden ausführbar. Die entsprechende Geschwindigkeit des Bolzens von beispielsweise 20 mm/s ist ausreichend sowohl für die Sicherheitsanforderungen als auch die sonstigen Anforderungen der Maschinenhersteller und Bediener in Sachen Handhabung. Mit der genannten Geschwindigkeit ist somit eine Betätigung eines etwa 20 mm aus dem Gehäuse der Zuhaltung vorstehenden Bolzens innerhalb eines Zeitfensters von etwa einer Sekunde erreichbar.

Eine Verhinderung des Verklemmens des Bolzens und/oder eine Verhinderung der Zerstörung des Antriebs kann über die Steuerung erreicht werden, indem diese die Geschwindigkeit des Bolzens regelt und gleichzeitig die Bewegung des Antriebs überwacht, um festzustellen, ob der Bolzen "klemmt" oder "in Block" fährt. Durch die Bewegungskopplung ist die Überwachung der Bewegung des Antriebs gleichbedeutend mit einer Überwachung der Bewegung des Bolzens. Diese Überwachung der Bewegung des Antriebs mit der Steuerung kann über eine Ermittlung der Zeit, die der Bolzen benötigt zwischen den beiden Endstellungen zu verfahren, und einem Vergleich mit einem vorgegebenen Schwellenwert für diese Zeit, erreicht werden. Bei Überschreitung des Schwellenwerts, der in einem Speicher der Steuerung abgespeichert sein kann, kann der Antrieb abgeschaltet werden und ein Fehlersignal von der Steuerung ausgegeben werden. Das Erreichen der Endstellungen kann über mindestens einen Sensor erfolgen, der mit der Steuerung verbunden ist. Der Sensor kann als Lichtschranke, RFID-Sensor, Puls-Echo-Sensor, mechanischer Kontakt, Reed-Kontakt oder Hall-Sensor ausgestaltet sein. Es kann auch vorgesehen sein, dass die Drehung des Antriebs über eine "Drehüberwachung" des Antriebs erfolgt.

Die Zeitmessung und die "Drehüberwachung" können auch in einer Ausführungsform gemeinsam vorgesehen sein. Beispielsweise kann eine "Drehüberwachung" dadurch erreicht werden, dass der Elektromotor als Schrittmotor ausgestaltet ist, der eine Rückmeldung über die Drehung an die Steuerung gibt. Ferner bestimmt die Steuerung die Position des beweglichen Teils relativ zum feststehenden Teil zum Schutz eines Verklemmens und/oder Heißlaufens des Antriebs, indem die Steuerung mit mindestens einem Sensor für die Positionsbestimmung verbunden ist. Das bedeutet, dass der Bolzen erst nach Signalisierung, dass sich das bewegliche Teil in der zu verriegelnden Position befindet, ausgefahren werden kann.

Mit dem elektromotorischen Antrieb des Bolzens sind verschiedene Vorteile verbunden. Der Antrieb als solcher ist sehr schwer zu manipulieren, da er keinen Einfluss durch ein Magnetfeld aufweist. Zudem ist ein größerer Hub (wesentlich mehr als 10 mm, d.h. mehrere Faktoren dieser Größenordnung) als bei der Verwendung mit einem Elektromagneten erreichbar, wobei zudem eine über den Hub nahezu konstante Krafteinwirkung auf den Bolzen realisierbar ist.

Durch die Verwendung eines elektromotorischen Antriebs, der als "Drehmotor" mit einer mechanischen Übertragungseinrichtung ausgestaltet ist, ist die Bewegung des Bolzens umkehrbar, und es wird keine federvorgespannte Anordnung verwendet, um eventuell einen Rückhub des Bolzens zu erreichen. Ferner können definierte Bolzenpositionen, die zwischen den maximalen Bolzenhubpositionen angeordnet sind, angefahren werden, wobei die Geschwindigkeit des Bolzens durch die Wahl der Getriebeübersetzung bzw. durch die anpassbare Übertragungseinrichtung beeinflussbar ist und mittels der elektronischen Steuerung des Elektromotors regelbar einstellbar ist. Die Übertragungseinrichtung wandelt dabei die Drehbewegung des Elektromotors in eine lineare Bewegung des Bolzens um. Der Bolzen kann unter einer Seitenlast von etwa 100 N (beispielsweise durch eine Verspannung der Türe bzw. des beweglichen Teils) eine Entriegelungs-/Verriegelungskraft von ungefähr der Hälfte der Seitenlast aufbringen.

Zudem behält die Zuhaltung mit dem elektromotorischen Antrieb und der mechanischen Übertragungseinrichtung im Falle eines Stromausfalls den zuletzt vor dem Stromausfall vorliegenden Zustand der Zuhaltung bei. Die Zuhaltung ist als bistabiles System ausgestaltet.
Bevorzugt ist die maximal zulässige Stromaufnahme des Elektromotors auf 800 mA, insbesondere 600 mA, besonders bevorzugt 500 mA, begrenzt. Dadurch wird bei geringer Stromaufnahme des Elektromotors eine hohe Bewegungsleistung des Bolzens erreicht. Ferner kann es bevorzugt sein, wenn der Elektromotor an der Abtriebswelle eine Leistung von 0,2 Nm bis 0,4 Nm aufweist und eine Drehzahl zwischen 70 U/min bis 170 U/min resultiert. Eine kurzfristig größere Stromaufnahme kann durch einen geeigneten Kondensator geschaltet werden. Durch die Begrenzung der maximal zulässigen Stromaufnahme des Elektromotors kann auch die Funktion der Steuerungstechnischen Einrichtung (SPS) gewährleistet werden, um unsichere Zustände, z.B. den Ausfall der SPS oder einzelner Komponenten der Steuerungstechnik durch eine zu große Stromaufnahme durch den Elektromotor zu verhindern.

Durch eine bevorzugte Anordnung des Elektromotors quer zur Bewegung des Bolzens ist eine kompakte Ausgestaltung der Zuhaltung möglich. Für eine weitere Reduzierung des Volumens der Zuhaltung kann der Elektromotor vorzugsweise längs zu Bewegung des Bolzens angeordnet sein. Der Bolzen kann dazu eine vorzugsweise an ihn angeformte Zahnstange als Teil der Übertragungseinrichtung aufweisen, die mit einem mit dem Antrieb verbundenen Schneckenrad als weiterem Teil der Übertragungseinrichtung in Eingriff steht.

Die Übertragungseinrichtung als reine Getriebeeinheit weist vorzugsweise ein mit dem Antrieb verbundenes Stirnrad und eine in Eingriff mit dem Stirnrad stehende, mit dem Bolzen verbundene Zahnstange auf. Hierdurch wird eine kostengünstige und in der Konstruktion sowie Herstellung einfach zu planende und zu montierende Zuhaltung geschaffen.

Die Übertragungseinrichtung als reine Getriebeeinheit kann vorzugsweise ein mit dem Antrieb verbundenes Schneckenrad und eine in Eingriff mit dem Schneckenrad stehende, mit dem Bolzen verbundene Kniehebel-Baugruppe aufweisen. Hierdurch wird eine kostengünstige und in der Konstruktion sowie Herstellung einfach zu planende und zu montierende Zuhaltung geschaffen. Zudem ist durch die Kniehebel-Baugruppe eine hohe Übersetzung/"Hebelwirkung" möglich. Die Anlenkung der Übertragungseinrichtung an die Kniehebel-Baugruppe erfolgt vorzugsweise über ein Langloch. Der Punkt der als Stellglied ausgestalteten Übertragungseinrichtung überträgt die Bewegung auf die Kniehebel-Baugruppe vorzugsweise über ein Langloch. Die Übertragungseinrichtung ist dabei in ihrer horizontalen Ausrichtung ortsfest für einen sauberen Eingriff des Schneckenrades. Eine einfache Konstruktion für eine sicherheitsgerichtete Anwendung mit hohen Anforderungen ist möglich.

Vorzugsweise kann der Sensor, mit dem die Bewegung bzw. Position des Bolzens ermittelbar ist, als Lichtschranke, RFID-Sensor, Puls-Echo-Sensor, mechanischer Kontakt oder Hall-Sensor ausgestaltet sein, um eine kostengünstige und dabei sichere Zuhaltung zu realisieren, wobei der Sensor in Abhängigkeit von den äußeren Bedingungen, die auch eine Manipulationssicherheit einschließen, ausgewählt werden kann.

Die Erfindung wird nachstehend anhand des in den beigefügten Abbildungen dargestellten Ausführungsbeispiels näher erläutert.
Fig. 1 zeigt schematisch eine erfindungsgemäße Zuhaltung in einer arretierenden Stellung bzw. mit ausgefahrenem Bolzen;
Fig. 2 zeigt schematisch ein weiteres Ausführungsbeispiel einer erfindungsgemäßen Zuhaltung in einer arretierenden Stellung bzw. mit ausgefahrenem Bolzen.

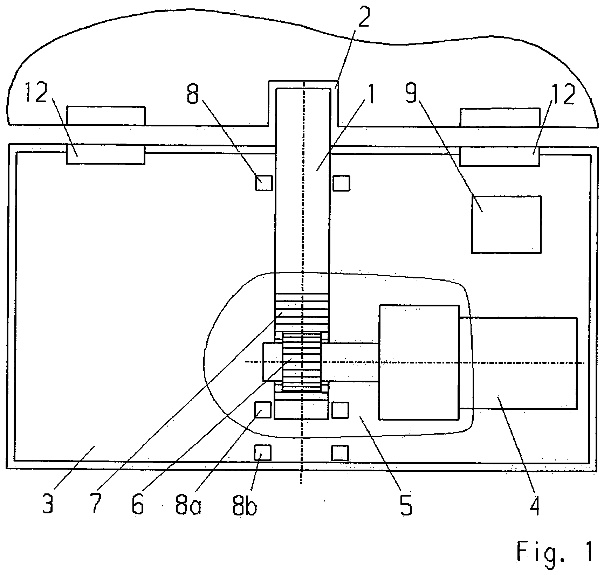

In Fig. 1 ist schematisch eine erfindungsgemäße Zuhaltung in einem arretierenden Zustand gezeigt. Mit einem Bolzen 1 ist die zeichnerisch angedeutete Tür als beweglicher Teil gegenüber einer nicht dargestellten feststehenden Wand als feststehendem Teil zuhaltbar, wenn die Zuhaltung an einem der beiden Teile befestigt ist und mit dem Bolzen 1 in eine entsprechende Aussparung 2 des anderen Teils formschlüssig eingreift. Der Bolzen 1 befindet sich in einer arretierenden bzw. blockierenden Endstellung.

In der entriegelten Endstellung ist der Bolzen 1 im Wesentlichen im Gehäuse 3 eingefahren.

In der in Fig. 1 verriegelnden Endstellung ist der Bolzen 1 aus dem Gehäuse 3 ausgefahren und kann die Tür arretieren. Zu diesem Zweck greift der Bolzen 1 in die Aussparung 2 an der Tür bzw. der Wand formschlüssig ein, je nachdem, an welchem der beiden Teile, d.h. Tür oder Wand, die Zuhaltung montiert ist.

Der Bolzen 1 ist in Bolzenlängsrichtung beweglich geführt. Zum Antrieb des Bolzens 1 ist ein Antrieb 4 vorgesehen, der den Bolzen 1 über eine zwischengekoppelte Übertragungseinrichtung 5 bewegen kann. Im Prinzip treibt der Antrieb 4 die Übertragungseinrichtung 5 an, die wiederum den Bolzen 1 bewegt. Der Antrieb 4 ist als Elektromotor ausgestaltet. Die Übertragungseinrichtung 5 ist als reine Getriebeeinrichtung ausgestaltet.

Der Bolzen 1 gleitet endseitig in einer den Bolzenumfang umfassenden Führung für eine lineare Bewegung.

Die Übertragungseinrichtung 5 weist ein mit dem Antrieb 4 verbundenes Stirnrad 6 und eine in Eingriff mit dem Stirnrad 6 stehende, mit dem Bolzen 1 verbundene Zahnstange 7 auf. Das Stirnrad 6 ist direkt mit dem Antrieb 4 verbunden. Das Stirnrad 6 steht direkt formschlüssig in Eingriff mit der Zahnstange 7, die direkt mit dem Bolzen 1 unter sofortiger Weitergabe der Bewegung der Zahnstange 7 an den Bolzen 1 verbunden ist.

Die Übertragungseinrichtung 5 wandelt die rotatorische Bewegung des Antriebs 4 in eine translatorische Bewegung des Bolzens 1 um.

Der Antrieb 4 ist direkt über die als Getriebeeinheit ausgestaltete Übertragungseinrichtung 5 mit dem Bolzen 1 verbunden. Dazu sind der Antrieb 4, die Übertragungseinrichtung 5 und der Bolzen 1 so miteinander verbunden, dass eine Bewegung der Übertragungseinrichtung 5 bzw. des Antriebs 4 zu einer unmittelbaren Bewegung des Bolzens 1 führt. Ferner sind der Antrieb 4, die Übertragungseinrichtung 5 und der Bolzen 1 so miteinander verbunden, dass eine Bewegungsumkehr des Antriebs 4 zu einer sofortigen Bewegungsumkehr in der Übertragungseinrichtung 5 führt. Bolzen 1, Antrieb 4 und Übertragungseinrichtung 5 sind direkt mechanisch miteinander gekoppelt durch formschlüssigen Eingriff. Die direkte mechanische Kopplung führt zu einer unmittelbaren Umkehr der Bolzenbewegungsrichtung bei einer Umkehr der Bewegung des Antriebs 4. Die Verbindung von Antrieb 4, Übertragungseinrichtung 5 und Bolzen 1 zeichnet sich durch eine direkte bzw. unmittelbare Weitergabe von kinetischer Energie aus.

Zur Überwachung der Bewegung des Bolzens 1 ist ein Sensor 8 vorgesehen, der ermittelt, in welcher Endposition sich der Bolzen 1 befindet. Der Sensor 8 ist im dargestellten Ausführungsbeispiel als Lichtschranke ausgestaltet. Im Fall, dass der Bolzen 1 im Gehäuse zurückgefahren ist, behindert der Bolzen 1 die Lichtschranke nicht und der Sensor 8 kann ein Signal liefern, dass sich der Bolzen 1 in der entriegelten Position befindet. Es kann dabei vorgesehen sein, dass der Sensor 8 in den Endstellungen das Signal "Lichtschranke blockiert" gibt, indem mit der Lichtschranke eine Ausnehmung des Bolzens 1 erfassbar ist, und die Ausnehmung zu der Lichtschranke so angeordnet ist, dass zwischen den Endstellungen die Lichtschranke durch die Ausnehmung nicht blockiert ist. In den Endstellungen wird der Rand der Ausnehmung durch den Sensor 8 bzw. die Lichtschranke erfasst und die Lichtschranke unterbrochen.

Es kann auch vorgesehen sein, dass der Sensor 8 als ortsfeste Lichtschranke in Bezug auf zwei den Bolzen 1 durchquerende Durchgangslöcher so angeordnet ist, dass in den Endstellungen die Lichtschranke ungehindert durch die beiden Durchgangslöcher hindurch tritt und während der Bewegung des Bolzens 1 vom Bolzen 1 unterbrochen wird.

Es kann auch vorgesehen sein, dass zwei als Lichtschranken ausgestaltete, in Längsrichtung bzw. Verfahrrichtung des Bolzens 1 etwa um den Bewegungshub des Bolzens 1 beabstandete Sensoren 8a, 8b an dem dem Gehäuseaustritt beabstandeten Ende des Bolzens 1 bzw. der Verlängerung mit der Übertragungseinrichtung 5 vorgesehen sind. Der in der Fig. 1 dargestellte Sensor 8a kann dann beispielsweise bei ausgefahrenem Bolzen 1 ebenso wie der Sensor 8b das Signal liefern "Lichtschranke frei". Bei eingefahrenem Bolzen 1 liefern die beiden Sensoren 8a, 8b das Signal "Lichtschranke unterbrochen".

In einem alternativen Ausführungsbeispiel können die als beabstandete Lichtschranken ausgestalteten Sensoren 8a und 8b auch im vorderen Bereich im Gehäuse 3 benachbart zur Durchtrittsöffnung für den Bolzen 1 angeordnet sein. Eine Anordnung im Bereich der Durchtrittsöffnung schafft eine kompaktere Bauform.

Die Sensoren 8, 8a und 8b können auch als RFID-Sensor, Puls-Echo-Sensor, mechanischer Kontakt, Reed-Kontakt oder Hall-Sensor zur Positionsbestimmung des Bolzens 1 ausgestaltet sein. Die Position im Gehäuse 3 kann weitestgehend den Positionen der als Lichtschranke ausgestalteten Sensoren 8, 8a und 8b entsprechen.

Zur Ansteuerung des Antriebs 4 bzw. des Elektromotors ist eine Steuerung 9 vorgesehen, die auch mit dem Sensor 8 verbunden ist, um beispielsweise zu ermitteln, in welcher Endposition sich der Bolzen 1 befindet. Die Steuerung 9 kann auch dazu ausgestaltet sein, die Zeit zu bestimmen, die der Bolzen für die Bewegung von einer Endstellung in die andere Endstellung benötigt. So kann ermittelt werden, ob sich der Antrieb 4 "frei" bewegen kann und der Bolzen 1 nicht in "Block fährt" bzw. behindert wird. Anhand der von der Steuerung 9 geregelten Geschwindigkeit des Bolzens 1 und dem Verfahrweg zwischen den Endstellungen kann die maximal zulässige Zeit als Schwellenwert in einem Speicher der Steuerung 9 abgespeichert sein oder von dieser berechnet werden. Wird der Schwellenwert überschritten, so kann davon ausgegangen werden, dass eine Behinderung der Bewegung von Bolzen 1und Antrieb 4 vorliegt.

Da eine direkte mechanische Kopplung von Antrieb 4, Übertragungseinrichtung 5 und Bolzen 1 vorliegt, müsste sich der Bolzen 1 bei einer Beaufschlagung des Elektromotors mit Strom bewegen. Liegt allerdings eine Blockade außerhalb des Gehäuses 3 vor, so kann sich der Bolzen 1 nicht bewegen. Diese Blockade kann durch eine Verklemmung des Bolzens 1 verursacht sein, indem die Aussparung 2 nicht an der in Fig. 1 gezeigten Position vorliegt, sondern der Bolzen 1 in der Aussparung 2 verkeilt ist (von der verriegelnden Stellung in die entriegelte Stellung) oder nicht in die Aussparung 2 bzw. aus dem Gehäuse 3 bewegt werden kann (von der entriegelten Stellung in die verriegelnde Position). In Falle der Blockade kann die Steuerung die Blockade über den Sensor 8 ermitteln und ein Fehlersignal generieren. Zur Überwachung einer Bewegung des Antriebs 4 kann auch vorgesehen sein, dass der als Elektromotor ausgestaltete Antrieb 4 ein Schrittmotor ist, der eine Rückmeldung über die "ausgeführte" Bewegung an die Steuerung 9 gibt. Beispielsweise kann bei der Blockade der Bewegung des Antriebs 4 eine Abschaltung des Antriebs 4 und Ausgabe eines Fehlersignals durch die Steuerung 9 erfolgen.

Am Gehäuse 3 der Zuhaltung ist mindestens ein weiterer Sensor 12 an der dem beweglichen Teil zugewandten Seite angebracht, um festzustellen, ob sich das bewegliche Teil in der zu verriegelnden Position befindet oder nicht. Der Sensor 12 ist mit der Steuerung 9 verbunden, und die Steuerung 9 erkennt die Position des beweglichen Teils, wobei der Bolzen 1 erst dann in die verriegelnde Endstellung ausgefahren wird, wenn der Sensor 12 die Position des beweglichen Teils "positiv" erkannt hat. Vorzugsweise ist der Sensor 12 als RFID-Sensor oder Puls-Echo-Sensor (CSS) ausgeführt.

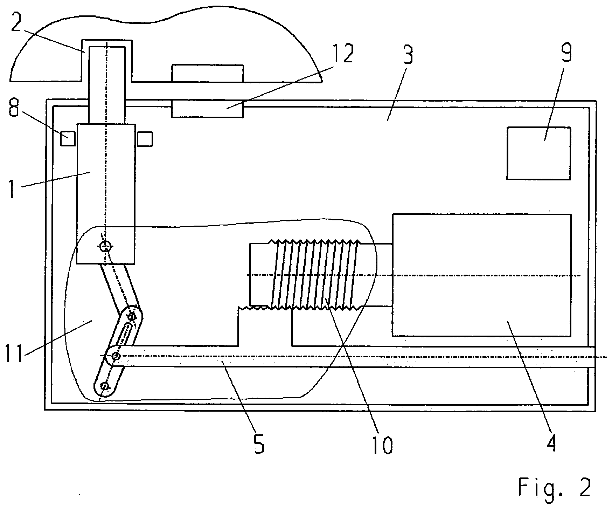

Im in Fig. 2 gezeigten Ausführungsbeispiel einer erfindungsgemäßen Zuhaltung weist die Übertragungseinrichtung 5 ein mit dem Antrieb 4 verbundenes Schneckenrad 10 und eine in Eingriff mit dem Schneckenrad 10 stehende, mit dem Bolzen 1 verbundene Kniehebel-Baugruppe 11 auf. Die Ausgestaltung der sonstigen Elemente der Zuhaltung entspricht sonst dem in Fig. 1 gezeigten Ausführungsbeispiel.

## Patentansprüche

1. Zuhaltung für ein Bauteil zum Verschließen einer ein feststehendes Teil und ein bewegliches Teil aufweisenden Öffnung, mit einem Bolzen (1), der zwischen einer verriegelnden und einer entriegelten Endstellung in Bolzenlängsrichtung beweglich geführt ist, einem eine Bewegung ausführenden Antrieb (4) zum Bewegen des Bolzens (1) und einer Übertragungseinrichtung (5) zwischen dem Antrieb (4) und dem Bolzen (1), wobei der Antrieb (4) ein Elektromotor ist, und der Antrieb (4), die Übertragungseinrichtung (5) und der Bolzen (1) unter unmittelbarer Weitergabe kinetischer Energie mechanisch bewegungsgekoppelt sind, derart, dass eine Überwachung der Bewegung des Antriebs (4) gleichwertig und gleichbedeutend ist mit einer Überwachung der Bewegung des Bolzens (1), wobei die Bolzengeschwindigkeit über eine Steuerung (9) regelbar ist, und eine Überwachung der Bewegung des mit dem Bolzen (1) bewegungsgekoppelten Antriebs (4) mit der Steuerung (9) durchführbar ist, und die Steuerung (9) mit mindestens einem Sensor (12) verbunden ist für eine Bestimmung der Position des beweglichen Teils relativ zum feststehenden Teil, ein weiterer mit der Steuerung (9) verbundener Sensor (8) vorgesehen ist, mit dem das Erreichen der Endstellungen des Bolzens (1) bestimmbar ist und der Antrieb (4) mit der Steuerung (9) für eine Rückmeldung der Drehung des Antriebs (4) verbunden ist.

2. Zuhaltung nach Anspruch 1, **dadurch gekennzeichnet, dass** die maximal zulässige Stromaufnahme des Elektromotors auf 800 mA, insbesondere 600 mA, besonders bevorzugt 500 mA, begrenzt ist.

3. Zuhaltung nach Anspruch 1 oder 2, **dadurch gekennzeichnet, dass** der Antrieb (4) quer zur Bewegungsrichtung des Bolzens (1) angeordnet ist.

4. Zuhaltung nach einem der Ansprüche 1 bis 3, **dadurch gekennzeichnet, dass** die Übertragungseinrichtung (5) ein mit dem Antrieb (4) verbundenes Stirnrad (6) und eine in Eingriff mit dem Stirnrad (6) stehende, mit dem Bolzen (1) verbundene Zahnstange (7) aufweist.

5. Zuhaltung nach einem der Ansprüche 1 bis 3, **dadurch gekennzeichnet, dass** die Übertragungseinrichtung (5) ein mit dem Antrieb (4) verbundenes Schneckenrad (10) und eine in Eingriff mit dem Schneckenrad (10) stehende, mit dem Bolzen (1) verbundene Kniehebel-Baugruppe (11) aufweist.

6. Zuhaltung nach einem der Ansprüche 1 bis 5, **dadurch gekennzeichnet, dass** der Sensor (12) als RFID-Sensor, Puls-Echo-Sensor, mechanischer Kontakt, Reed-Kontakt oder Hall-Sensor ausgestaltet ist.

7. Zuhaltung nach Anspruch 1, **dadurch gekennzeichnet, dass** der weitere Sensor (8) als Lichtschranke, RFID-Sensor, Puls-Echo-Sensor, mechanischer Kontakt, Reed-Kontakt oder Hall-Sensor ausgestaltet ist.

8. Zuhaltung nach einem der Ansprüche 1 bis 7, **dadurch gekennzeichnet, dass** die Steuerung (9) einen Speicher für einen Zeitschwellenwert aufweist, und in der Steuerung (9) ein Vergleich mit der Zeit durchführbar ist, die der Bolzen (1) für eine Bewegung zwischen den Endstellungen benötigt.

## Claims

1. Guard lock for a component for closing an opening having a fixed part and a movable part, with a bolt (1), which is guided movably between a locking and an unlocked end position in the longitudinal direction of the bolt, a drive (4) implementing a movement for moving the bolt (1) and a transmission device (5) between the drive (4) and the bolt (1), wherein the drive (4) is an electric motor, and the drive (4), the transmission device (5) and the bolt (1) are mechanically coupled in terms of movement in such a way as to directly transfer kinetic energy in such a way that a monitoring of the movement of the drive (4) is equivalent to and synonymous with a monitoring of the movement of the bolt (1), it being possible for the bolt speed to be regulated via a control (9), and it being possible for monitoring of the movement of the drive (4), which is coupled in terms of movement to the bolt (1), to be implemented by the control (9), and the control (9) being connected to at least one sensor (12) for determining the position of the movable part relative to the fixed part, a further sensor (8) being provided, which is connected to the control (9), with which it is determinable that the end positions of the bolt (1) have been reached and the drive (4) is connected to the control (9) for feedback relating to the rotation of the drive (4).

2. Guard lock according to claim 1, **characterized in that** the maximum permissible current consumption of the electric motor is limited to 800 mA, in particular 600 mA, particularly preferably 500 mA.

3. Guard lock according to claim 1 or 2, **characterized in that** the drive (4) is arranged transversely with respect to the movement direction of the bolt (1).

4. Guard lock according to one of claims 1 to 3, **characterized in that** the transmission device (5) has a spur gear (6), which is connected to the drive (4), and a toothed rack (7), which is in engagement with the spur gear (6) and is connected to the bolt (1).

5. Guard lock according to one of claims 1 to 3, **characterized in that** the transmission device (5) has a worm gear (10), which is connected to the drive (4), and a toggle lever assembly (11), which is in engagement with the worm gear (10) and is connected to the bolt (1).

6. Guard lock according to one of claims 1 to 5, **characterized in that** the sensor (12) is in the form of an RFID sensor, a pulse-echo sensor, a mechanical contact, a reed contact or a Hall sensor.

7. Guard lock according to claim 1, **characterized in that** the further sensor (8) is in the form of a light barrier, an RFID sensor, a pulse-echo sensor, a mechanical contact, a reed contact or a Hall sensor.

8. Guard lock according to one of claims 1 to 7, **characterized in that** the control (9) has a memory for a time threshold value, and it is possible for a comparison with the time which is required by the bolt (1) for a movement between the end positions to be implemented in the control (9).

## Revendications

1. Gâchette pour un composant servant à fermer une ouverture présentant une partie immobile et une partie mobile, avec un boulon (1), qui est guidé de manière mobile dans une direction longitudinale de boulon entre une position finale de verrouillage et une position finale de déverrouillage, un entraînement (4) exécutant un déplacement servant à déplacer le boulon (1) et un dispositif de transfert (5) entre l'entraînement (4) et le boulon (1), dans laquelle l'entraînement (4) est un moteur électrique et l'entraînement (4), le dispositif de transfert (5) et le boulon (1) sont couplés en déplacement de manière mécanique en transférant directement une énergie cinétique de telle manière qu'une surveillance du déplacement de l'entraînement (4) est équivalente à et synonyme d'une surveillance du déplacement du boulon (1), dans laquelle la vitesse de boulon peut être régulée par l'intermédiaire d'une commande (9) et une surveillance du déplacement de l'entraînement (4) couplé en déplacement avec le boulon (1) peut être réalisée avec la commande (9) et la commande (9) est reliée à au moins un capteur (12) pour une détermination de la position de la partie mobile par rapport à la partie immobile, un autre capteur (8) relié à la commande (9) est prévu, avec lequel l'action d'atteindre les positions finales du boulon (1) peut être déterminée et l'entraînement (4) est relié à la commande (9) pour une réponse à la rotation de l'entraînement (4).

2. Gâchette selon la revendication 1, **caractérisée en ce que** la consommation de courant maximale admise du moteur électrique est limitée à 800 mA, en particulier à 600 mA, de manière particulièrement préférée à 500 mA.

3. Gâchette selon la revendication 1 ou 2, **caractérisée en ce que** l'entraînement (4) est disposé de manière transversale par rapport à la direction de déplacement du boulon (1).

4. Gâchette selon l'une quelconque des revendications 1 à 3, **caractérisée en ce que** le dispositif de transfert (5) présente une roue frontale (6) reliée à l'entraînement (4) et une crémaillère (7) en prise avec la roue frontale (6), reliée au boulon (1).

5. Gâchette selon l'une quelconque des revendications 1 à 3, **caractérisée en ce que** le dispositif de transfert (5) présente une roue-vis (10) reliée à l'entraînement (4) et un module à levier coudé (11) en prise avec la roue-vis (10), reliée au boulon (1).

6. Gâchette selon l'une quelconque des revendications 1 à 5, **caractérisée en ce que** le capteur (12) est configuré sous la forme d'un capteur RFID, d'un capteur d'écho d'impulsions, d'un contact mécanique, d'un contact Reed ou d'un capteur à effet Hall.

7. Gâchette selon la revendication 1, **caractérisée en ce que** l'autre capteur (8) est configuré sous la forme d'une barrière photoélectrique, d'un capteur RFID, d'un capteur d'écho d'impulsions, d'un contact mécanique, d'un contact Reed ou d'un capteur à effet Hall.

8. Gâchette selon l'une quelconque des revendications 1 à 7, **caractérisée en ce que** la commande (9) présente une mémoire pour une valeur seuil de temps, et une comparaison avec le temps, dont le boulon (1) a besoin pour un déplacement entre les positions finales, peut être effectuée dans la commande (9).
